# EUROPEAN PATENT SPECIFICATION

(11) **EP 3 446 939 B1**
(45) Date of publication and mention of the grant of the patent: **08.01.2020**
(21) Application number: 18188865.2
(22) Date of filing: 14.08.2018
(51) Int. Cl.: B60W 20/18, B60W 50/14

(54) **FUEL MAINTENANCE GUIDE SYSTEM FOR VEHICLE**
KRAFTSTOFFWARTUNGSFÜHRUNGSSYSTEM FÜR FAHRZEUG
SYSTÈME DE GUIDE DE MAINTENANCE DE CARBURANT POUR VÉHICULE

(30) Priority: 23.08.2017 JP 2017159912; 01.08.2018 JP 2018144897
(43) Date of publication of application: 27.02.2019
(73) Proprietor: Mitsubishi Jidosha Kogyo Kabushiki Kaisha, Tokyo 108-8410 (JP)
(72) Inventor: MIYAMOTO, Naoki, Minato-Ku, Tokyo 108-8410 (JP)
(74) Representative: Regimbeau

(56) References cited:
- WO-A1-2012/038790
- WO-A1-2012/102123
- US-A1- 2009 321 159
- US-A1- 2010 256 931

## Description

### TECHNICAL FIELD

The present invention relates to a fuel maintenance guide system for a vehicle.

### BACKGROUND

Plug-in hybrid automobiles can run using only electric power from a traveling battery as a power source without operating an engine, thus enabling clean and silent traveling without emitting exhaust gas. However, in a case of a traveling pattern with prolonged suspension of the engine, components within the engine can degrade, rust can occur, and fuel can degrade. For this reason, some plug-in hybrid automobiles are equipped with a fuel maintenance function for forcing the engine to operate in order to promote the replacement of fuel even when the traveling battery is still charged enough. To avoid the forced engine operation, these plug-in hybrid automobiles equipped with the fuel maintenance function require a predetermined amount (e.g. 15L) of fuel consumption within a predetermined period (e.g. three months). Once the fuel maintenance starts, a predetermined amount of fuel needs to be supplied anew to cancel the fuel maintenance. If a fuel tank has no free capacity, the engine is forcedly used as the power source until being able to be supplied with the predetermined amount of fuel. Even when a driver who judges that the predetermined amount of fuel can be supplied refuels, if an actual fuel supply amount does not reach the predetermined amount, the engine is forcedly used as the power source until being able to be supplied with the predetermined amount of fuel afresh (continuation of fuel maintenance).

Patent Document 1 (JP2016-88131A) discloses a display device for a hybrid automobile equipped with a fuel consumption mode (fuel maintenance function) for forcing the engine to operate to prevent the degradation and the alternation of fuel. This display device for a hybrid automobile includes a fuel meter which indicates the amount of fuel remaining in a fuel tank (hereinafter, referred to as remaining amount) and enables a region corresponding to the amount of fuel consumed in the fuel consumption mode to be colorfully distinguished from the other regions of the remaining amount indicated by the fuel meter. The display device for a hybrid automobile disclosed in Patent Document 1 (JP2016-88131A) allows a driver to check how the fuel is consumed in the fuel consumption mode.

### SUMMARY

A fuel maintenance guide system for a vehicle according to at least one embodiment of the present invention comprises a fuel-maintenance-execution-date calculation part capable of calculating a duration until a fuel maintenance starts, from a reference date when more than a predetermined amount of a fuel is supplied to a fuel tank; a remaining-fuel detection part capable of detecting a remaining fuel amount in the fuel tank; a user-notification-information generating part capable of generating user notification information including the duration, the remaining fuel amount, and a fuel supply amount necessary for canceling the fuel maintenance, based on the duration calculated in the fuel-maintenance-execution-date calculation part, the remaining fuel amount detected in the remaining-fuel detection part, and the fuel supply amount necessary for canceling the fuel maintenance; and a user notification part capable of displaying the user notification information generated in the user-notification-information generating part on a screen.

### BRIEF DESCRIPTION OF DRAWINGS

FIG. 1 is a schematic block diagram showing a control configuration of a fuel maintenance guide system for a vehicle according to an embodiment of the present invention.
FIG. 2 is a diagram showing an example of a screen presented in a user notification part shown in FIG. 1.
FIG. 3 is a schematic flow chart showing control details of the fuel maintenance guide system for a vehicle shown in FIG. 1.
FIG. 4 is a schematic block diagram showing a control configuration of a fuel maintenance guide system for a vehicle according to an embodiment of the present invention.
FIG. 5 is a diagram showing an example of a screen presented in a user notification part shown in FIG. 4.
FIG. 6 is a flow chart schematically showing control details of the fuel maintenance guide system for a vehicle shown in FIG. 4.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention. On the other hand, an expression such as "comprise", "include", "have", and "contain" are not intended to be exclusive of other components.

The display device for a hybrid automobile disclosed in Patent Document 1 (JP2016-88131A) indeed can inform a driver, during the execution of the fuel consumption mode, whether a predetermined amount of fuel necessary for canceling the fuel consumption mode can be supplied, but does not previously give notice of the execution of the fuel consumption mode and also does not inform the driver, before the execution of the fuel consumption mode, whether the predetermined amount of fuel necessary for canceling the fuel consumption mode can be supplied. Accordingly, even if the driver wishes to stop the engine and travel using only the motor in a quiet residential area or the like, the engine must to operate during the execution of the fuel consumption mode, and the driver's needs cannot be satisfied.

In view of the above circumstances, an object of at least one embodiment of the present invention is to provide a fuel maintenance guide system for a vehicle that can provide advance notice of the execution of a fuel maintenance and can inform one, before the execution of the fuel maintenance, whether a predetermined amount of fuel necessary for canceling the fuel maintenance can be supplied.

A plug-in hybrid automobile, to which a vehicle fuel maintenance guide system according to at least one embodiment of the present invention is applied, is a hybrid automobile having a traveling battery that can be charged with a charger. This hybrid automobile is equipped with a motor and an engine, so that it can travel using only the motor as the power source and can also travel using both the motor and the engine as the power source. Moreover, the plug-in hybrid automobile, to which a vehicle fuel maintenance guide system according to at least one embodiment of the present invention is applied, is equipped with a fuel maintenance function and is configured to force the engine to operate when a predetermined amount of fuel is not supplied within a predetermined period. For instance, the predetermined period may be three months, and the predetermined amount may be 15L. In this case, if fuel more than 15L is not supplied within three months at once, the engine is forced to operate in order to promote the replacement of fuel.

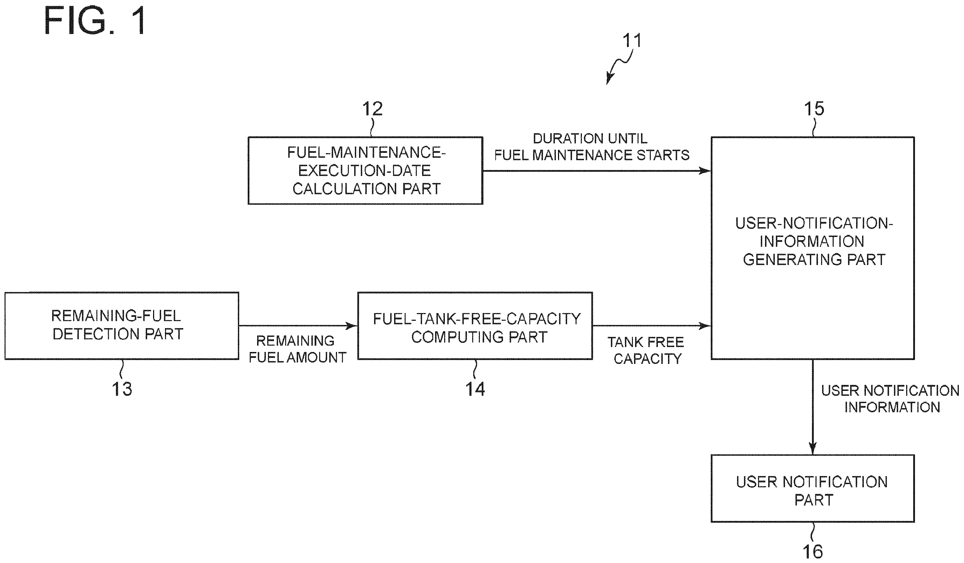

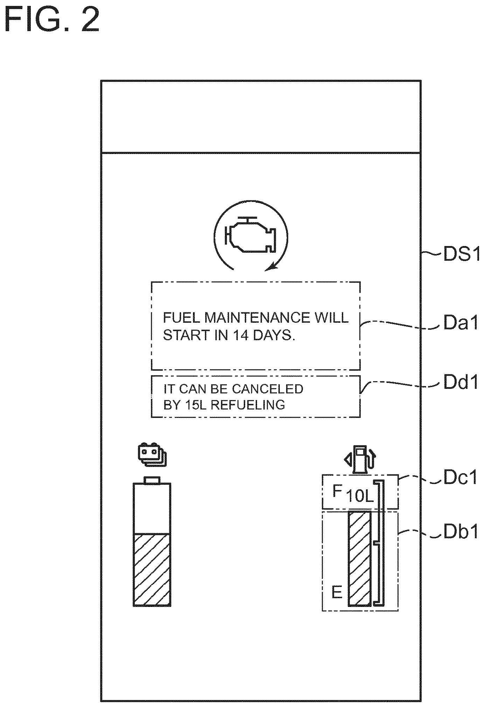

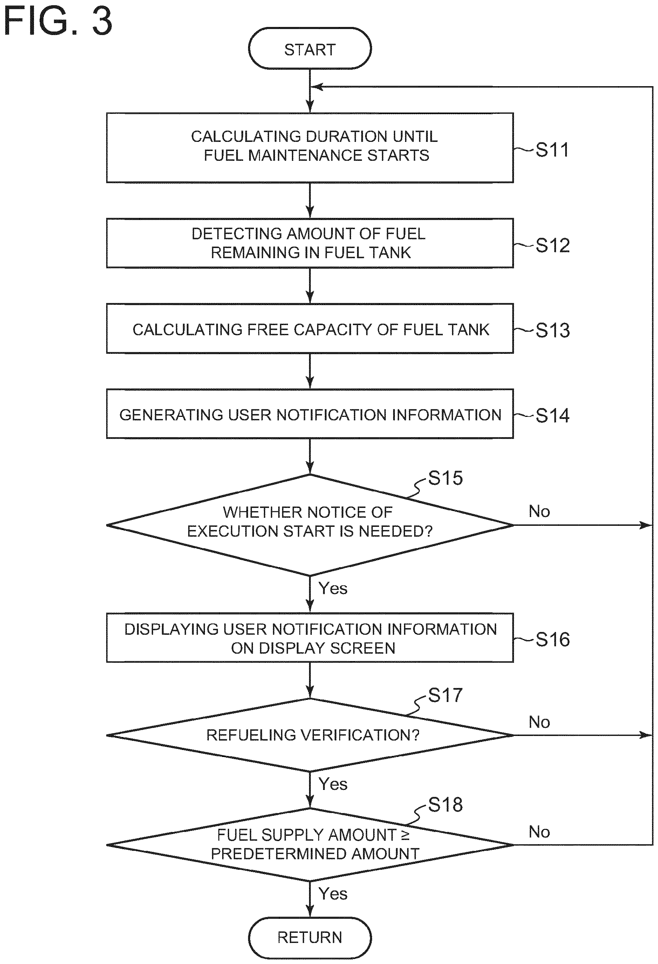

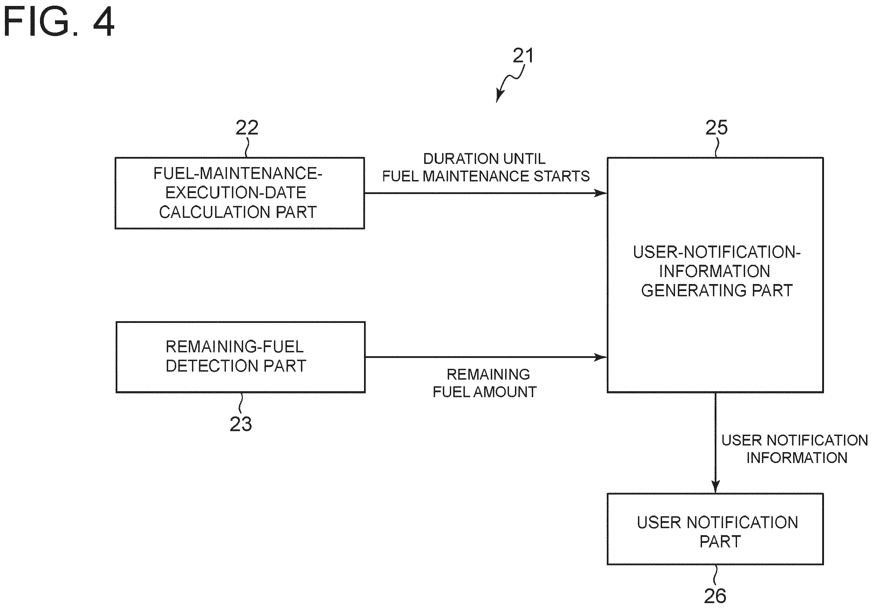

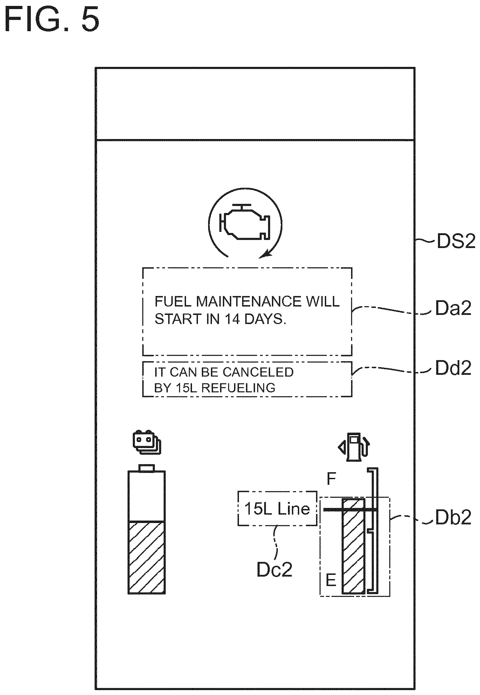

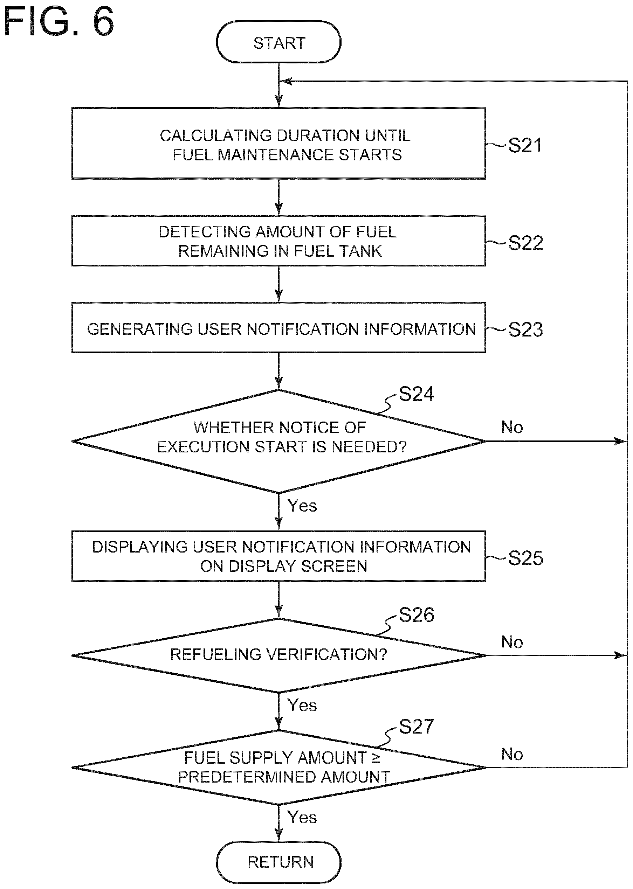

FIG. 1 is a schematic block diagram showing a control configuration of a fuel maintenance guide system 11 for a vehicle according to an embodiment of the present invention. FIG. 2 is a diagram showing an example of a screen DS1 presented in a user notification part 16 shown in FIG. 1. FIG. 3 is a schematic flow chart showing control details of the fuel maintenance guide system 11 for a vehicle shown in FIG. 1. FIG. 4 is a schematic block diagram showing a control configuration of a fuel maintenance guide system 21 for a vehicle according to an embodiment of the present invention. FIG. 5 is a diagram showing an example of a screen DS2 presented in a user notification part 26 shown in FIG. 4. FIG. 6 is a schematic flow chart showing control details of the fuel maintenance guide system 21 for a vehicle shown in FIG. 4.

The fuel maintenance guide system 11, 21 for a vehicle according to some embodiments of the present invention can give advance notice of the execution start of the fuel maintenance and can inform one, before the execution of the fuel maintenance, whether a necessary amount of fuel for canceling the fuel maintenance can be supplied.

As shown in FIGs. 1 and 4, the fuel maintenance guide system 11, 21 for a vehicle according to some embodiments of the present invention includes a fuel-maintenance-execution-date calculation part 12, 22, a remaining-fuel detection part 13, 23, a user-notification-information generating part 15, 25, and a user notification part 16, 26.

The fuel-maintenance-execution-date calculation part 12, 22 can calculate a duration (days) until the fuel maintenance starts, from a reference date when more than a predetermined amount of fuel is supplied to a fuel tank (not shown). For instance, the fuel-maintenance-execution-date calculation part 12 sets an execution start date of the fuel maintenance on the basis of the reference date when more than a predetermined amount of fuel is supplied to the fuel tank, and then calculates the duration until the fuel maintenance starts. Accordingly, in a case where the predetermined period is three months and the predetermined amount is 15L as described in the above example, the fuel-maintenance-execution-date calculation part 12 sets the execution start date of the fuel maintenance to three months after a reference date when fuel more than 15L is supplied to the fuel tank and calculates the duration until the fuel maintenance starts.

The remaining-fuel detection part 13, 23 can detect the amount of fuel remaining in the fuel tank (hereinafter, referred to as "remaining fuel amount").

The user-notification-information generating part 15, 25 can generate user notification information including: the duration (duration until the fuel maintenance starts); the fuel amount (remaining fuel amount in the fuel tank); and a fuel supply amount necessary for canceling the fuel maintenance, based on the duration (duration until the fuel maintenance starts) calculated in the fuel-maintenance-execution-date calculation part 12, 22, the amount of fuel (remaining fuel amount in the fuel tank) detected in the remaining-fuel detection part 13, 23, and the fuel supply amount necessary for canceling the fuel maintenance.

The user notification part 16 can receive the user notification information, generated in the user-notification-information-generating part 15, from the user-notification-information-generating part 15 and display the user notification information on the screen DS1. Thus, the user notification part 16 displays the duration Da1, Da2 (duration until the fuel maintenance starts) (e.g., "14 days"), the fuel amount Db1, Db2 (remaining fuel amount in the fuel tank), and the fuel supply amount Dd1, Dd2 (e.g., 15L) necessary for canceling the fuel maintenance, on the screen DS1, DS2 (see FIGs. 2 and 5).

As shown in FIGs. 2 and 5, for instance, on the screen DS1, DS2, a charging amount of a driving battery is represented by a bar graph with a diagram imitating the driving battery, and the amount of fuel remaining in the fuel tank is represented by a bar graph with a diagram imitating a gas station and with signs of E (Empty) and F (Full). Further, for instance, the screen DS1, DS2 displays the duration until the fuel maintenance with a diagram imitating the engine and displays the fuel supply amount (e.g., 15L) for canceling the fuel maintenance. For instance, as shown in FIGs. 2 and 5, massage "Fuel maintenance will start in 14 days, it can be canceled by 15L refueling" is displayed.

As shown in FIGs. 3 and 6, the fuel maintenance guide system 11, 21 for a vehicle according to some embodiments of the present invention first, in the fuel-maintenance-execution-date calculation part 12, 22, calculates the duration until the fuel maintenance starts, from a reference date when more than a predetermined amount of fuel is supplied to the fuel tank (step S11, S21). For instance, the fuel-maintenance-execution-date calculation part 12, 22 sets an execution start date of the fuel maintenance on the basis of the reference date when more than a predetermined amount of fuel is supplied to the fuel tank, and then calculates the duration until the fuel maintenance starts.

In the above-described fuel maintenance guide system 11, 21 for a vehicle according to some embodiments of the present invention, the user-notification-information generating part 15, 25 may report the user notification information to the user notification part 16, 26 only when the duration until the fuel maintenance starts is less than a predetermined duration.

In this case, for instance, on the screen DS1, DS2, a charging amount of the driving battery is represented by a bar graph with a diagram imitating the driving battery, and the amount of fuel remaining in the fuel tank is represented by a bar graph with a diagram imitating a gas station and with signs of E (Empty) and F (Full). The screen DS1, DS2 does not display the duration until the fuel maintenance and the fuel supply amount for canceling the fuel maintenance.

In this configuration, the user-notification-information generating part 15, 25 provides the user notification information to the user notification part 16, 26 only when the duration until the fuel maintenance starts is less than the predetermined duration. Thus, since the user notification information is not provided to the user notification part 16, 26 unless the duration until the fuel maintenance starts becomes less than the predetermined duration, the user (driver) is not conscious of the fuel maintenance unless the duration until the fuel maintenance starts becomes less than the predetermined duration, and the user (driver) is not put to extra annoyance.

Then, in the remaining-fuel detection part 13, 23, the amount of fuel remaining in the fuel tank is detected (step S12, S22).

Then, in the user-notification-information generating part 15, 25, the user notification information including the duration, the fuel amount, and the fuel supply amount necessary for canceling the fuel maintenance is generated based on the duration (duration until the fuel maintenance starts) calculated in the fuel-maintenance-execution-date calculation part 12, 22, the amount of fuel (remaining fuel amount in the fuel tank) detected in the remaining-fuel detection part 13, 23, and the fuel supply amount necessary for canceling the fuel maintenance (step S14, S23).

Then, in the user-notification-information generating part 15, 25, it is judged whether notice of the execution start of the fuel maintenance is needed (step S15, S24). The necessity of notice of the execution start of the fuel maintenance is judged by, for instance, whether the duration until the fuel maintenance starts is less than a predetermined duration.

Then, in the user-notification-information generating part 15, 25, if it is judged that notice of the execution start of the fuel maintenance is needed (Step S15, S24: Yes), the user-notification-information generating part 15, 25 displays the user notification information including the duration Da1, Da2 until the fuel maintenance starts, the fuel amount Db1, Db2 remaining in the fuel tank, and the fuel supply amount Dd1, Dd2 necessary for canceling the fuel maintenance, on the screen DS1, DS2 of the user notification part 16, 26, as shown in FIGs. 2 and 5 (step S16, S25).

When the user (driver) confirms notice of the execution start of the fuel maintenance and supplies fuel, the fuel supply amount is checked in the remaining-fuel detection part 13, 23 (step S17, S26). If the fuel supply amount is the predetermined amount or more (step S18, S27: Yes), the fuel maintenance is canceled, and the fuel-maintenance-execution-date calculation part 12, 22 calculates a duration until the fuel maintenance starts from a reference date (date of refueling anew) when more than the predetermined amount of fuel is supplied to the fuel tank (step S11, S21). On the other hand, if the fuel supply amount is less than the predetermined amount (step S18, S27: No), the fuel maintenance is not canceled. Thus, when the fuel maintenance execution takes place, fuel operation starts, and the fuel maintenance is executed until the predetermined amount of fuel is supplied to the fuel tank.

With the above-described fuel maintenance guide system 11, 21 for a vehicle according to some embodiments of the present invention, the user notification information including the duration until the fuel maintenance starts, the fuel amount remaining in the fuel tank, and the fuel supply amount necessary for canceling the fuel maintenance is generated in the user-notification-information generating part 15, 26; and the user notification information including the duration Da1, Da2 until the fuel maintenance starts, the fuel amount Db1, Db2 remaining in the fuel tank, and the fuel supply amount Dd1, Dd2 necessary for canceling the fuel maintenance is noticed in the user notification part 16, 26. Thus, the fuel maintenance guide system 11, 21 for a vehicle can give advance notice of the execution of the fuel maintenance and can inform one, before the execution of the fuel maintenance, whether the necessary amount of fuel for canceling the fuel maintenance can be supplied.

The fuel maintenance guide system 11 for a vehicle according to at least one embodiment of the present invention can give advance notice of the execution start of the fuel maintenance and can inform one, before the execution of the fuel maintenance, whether the necessary amount of fuel for canceling the fuel maintenance can be supplied.

As shown in FIG. 1, the fuel maintenance guide system 11 for a vehicle according to at least one embodiment of the present invention includes a fuel-maintenance-execution-date calculation part 12, a remaining-fuel detection part 13, a fuel-tank-free-capacity computing part 14, a user-notification-information generating part 15, and a user notification part 16.

The fuel-maintenance-execution-date calculation part 12 can calculate a duration until the fuel maintenance starts, from a reference date when more than a predetermined amount of fuel is supplied to a fuel tank (not shown). For instance, the fuel-maintenance-execution-date calculation part 12 sets an execution start date of the fuel maintenance on the basis of the reference date when more than a predetermined amount of fuel is supplied to the fuel tank, and then calculates the duration until the fuel maintenance starts. Accordingly, in a case where the predetermined period is three months and the predetermined amount is 15L as described in the above example, the fuel-maintenance-execution-date calculation part 12 sets the execution start date of the fuel maintenance to three months after a reference date when fuel more than 15L is supplied to the fuel tank and calculates the duration until the fuel maintenance starts.

The remaining-fuel detection part 13 can detect the amount of fuel remaining in the fuel tank. The fuel-tank-free-capacity computing part 14 can calculate a free capacity of the fuel tank, based on the remaining fuel amount in the fuel tank detected in the remaining-fuel detection part 13. For instance, the fuel-tank-free-capacity computing part 14 can calculate a difference between the capacity of the fuel tank and the remaining fuel amount detected in the remaining-fuel detection part 13 as the free capacity of the fuel tank. For instance, when the tank capacity is 45L, and the remaining fuel amount detected in the remaining-fuel detection part 13 is half, a free capacity of about 22L is calculated.

The user-notification-information generating part 15 can generate user notification information including: the duration (duration until the fuel maintenance starts); the fuel amount (remaining fuel amount in the fuel tank); and the free capacity (free capacity of the fuel tank), based on the duration (duration until the fuel maintenance starts) calculated in the fuel-maintenance-execution-date calculation part 12, the fuel amount (remaining fuel amount in the fuel tank) detected in the remaining-fuel detection part 13, and the free capacity (free capacity of the fuel tank) calculated in the fuel-tank-free-capacity computing part 14. The user notification information is not limited to the duration, the fuel amount, and the free capacity. It may include, for instance, the fuel supply amount necessary for canceling the fuel maintenance.

The user notification part 16 can receive the user notification information, generated in the user-notification-information generating part 15, from the user-notification-information generating part 15 and display the user notification information on the screen DS1. Thus, the user notification part 16 displays the duration Da1 (duration until the fuel maintenance starts) (e.g., "14 days"), the fuel amount Db1 (remaining fuel amount in the fuel tank), and the free capacity Dc1 (free capacity of the fuel tank) (e.g., "10L"), on the screen DS1 (see FIG. 2). The user notification information displayed on the screen DS1 is not limited to the duration Da1, the fuel amount Db1, and the free capacity Dc1. It may include, for instance, the fuel supply amount Dd1 (e.g., "15L") necessary for canceling the fuel maintenance (see FIG. 2).

As shown in FIG. 2, for instance, on the screen DS1, a charging amount of a driving battery is represented by a bar graph with a diagram imitating the driving battery, and the amount of fuel remaining in the fuel tank is represented by a bar graph with a diagram imitating a gas station and with signs of E (Empty) and F (Full). Further, for instance, the screen DS1 displays the duration until the fuel maintenance with a diagram imitating the engine and displays the fuel supply amount (e.g., 15L) for canceling the fuel maintenance. For instance, as shown in FIG. 2, massage "Fuel maintenance will start in 14 days, it can be canceled by 15L refueling" is displayed. Also, for instance, the screen DS1 displays the free capacity (e.g., "10L") of the fuel tank together with the remaining fuel amount in the fuel tank.

In the above-described fuel maintenance guide system 11 for a vehicle according to at least one embodiment of the present invention, the user-notification-information generating part 15 may report the duration until the fuel maintenance and the free capacity of the fuel tank (user notification information) to the user notification part 16 only when the duration until the fuel maintenance starts is less than a predetermined duration.

In this case, for instance, on the screen DS1, a charging amount of the driving battery is represented by a bar graph with a diagram imitating the driving battery, and the amount of fuel remaining in the fuel tank is represented by a bar graph with a diagram imitating a gas station and with signs of E (Empty) and F (Full). The screen DS1 does not display the duration until the fuel maintenance and the free capacity (e.g., 10L) of the fuel tank.

In this configuration, the user-notification-information generating part 15 provides the duration until the fuel maintenance and the free capacity of the fuel tank (user notification information) to the user notification part 16 only when the duration until the fuel maintenance starts is less than the predetermined duration. Thus, since the user notification information is not provided to the user notification part 16 unless the duration until the fuel maintenance starts becomes less than the predetermined duration, the user (driver) is not conscious of the fuel maintenance unless the duration until the fuel maintenance starts is less than the predetermined duration, and the user (driver) is not put to extra annoyance.

The predetermined duration can be optionally set. For instance, the default value may be 14 days, and it may be changed in accordance with a traveling distance. Additionally, the predetermined duration may be set so as to include at least a holiday.

In the above-described fuel maintenance guide system 11 for a vehicle according to at least one embodiment of the present invention, the user notification part 16 blinkingly displays the free capacity of the fuel tank on the screen DS1 when the fuel maintenance starts.

In this configuration, since the user notification part 16 blinkingly displays the free capacity of the fuel tank on the screen DS1 when the fuel maintenance starts, it is possible to bring the user's (driver's) attention to how much the fuel consumption is required to achieve the free capacity of the fuel tank necessary for canceling the fuel maintenance.

In the above-described fuel maintenance guide system 11 for a vehicle according to at least one embodiment of the present invention, when the free capacity of the fuel tank exceeds the fuel supply amount necessary for canceling the fuel maintenance, the user notification part 16 changes the indication of the free capacity of the fuel tank to an indication which shows that the free capacity of the fuel tank exceeds the fuel supply amount necessary for canceling the fuel maintenance.

In this configuration, when the free capacity of the fuel tank exceeds the fuel supply amount necessary for canceling the fuel maintenance, the user notification part 16 changes the indication of the remaining fuel amount of the fuel tank to an indication which shows that the free capacity of the fuel tank exceeds the fuel supply amount necessary for canceling the fuel maintenance. Thus, it is possible to inform the user (driver) that the fuel maintenance can be canceled if the vehicle is fully refueled at the time.

As shown in FIG. 2, in the above-described fuel maintenance guide system 11 for a vehicle according to at least one embodiment of the present invention, the user notification part 16 displays the free capacity (e.g., 10L) of the fuel tank in a free space above the indication showing the remaining fuel amount of the fuel tank on the screen.

In this configuration, the user notification part 16 displays the free capacity of the fuel tank in a free space above the indication showing the remaining fuel amount of the fuel tank on the screen. Thus, it is possible to inform the user (driver) how much the free capacity exists in the fuel tank.

As shown in FIG. 3, the fuel maintenance guide system 11 for a vehicle according to at least one embodiment of the present invention first, in the fuel-maintenance-execution-date calculation part 12, calculates the duration until the fuel maintenance starts, from a reference date when more than a predetermined amount of fuel is supplied to the fuel tank (step S11). For instance, the fuel-maintenance-execution-date calculation part 12 sets an execution start date of the fuel maintenance on the basis of the reference date when more than a predetermined amount of fuel is supplied to the fuel tank, and then calculates the duration until the fuel maintenance starts.

Then, in the remaining-fuel detection part 13, the amount of fuel remaining in the fuel tank is detected (step S12). Then, in the fuel-tank-free-capacity computing part 14, the free capacity of the fuel tank is calculated based on the amount of fuel remaining in the fuel tank detected in the remaining-fuel detection part 13 (step S13). For instance, the fuel-tank-free-capacity computing part 14 calculates a difference between the (whole) capacity of the fuel tank and the amount of fuel detected in the remaining-fuel detection part 13 as the free capacity of the fuel tank.

Then, in the user-notification-information generating part 15, the user notification information including: the duration (duration until the fuel maintenance starts); the fuel amount (remaining fuel amount in the fuel tank); and the capacity (free capacity of the fuel tank) is generated based on the duration (duration until the fuel maintenance starts) calculated in the fuel-maintenance-execution-date calculation part 12, the fuel amount (remaining fuel amount in the fuel tank) detected in the remaining-fuel detection part 13, and the free capacity (free capacity of the fuel tank) calculated in the fuel-tank-free-capacity computing part 14.

Then, in the user-notification-information generating part 15, it is judged whether notice of the execution start of the fuel maintenance is needed (step S15). The necessity of notice of the execution start of the fuel maintenance is judged by, for instance, whether the duration until the fuel maintenance starts is less than a predetermined duration.

Then, in the user-notification-information generating part 15, if it is judged that notice of the execution start of the fuel maintenance is needed (Step S15: Yes), the user-notification-information generating part 15 displays the user notification information including the duration Da1 until the fuel maintenance starts, the fuel amount Db1 remaining in the fuel tank, and the free capacity Dc1 of the fuel tank, on the screen DS1 of the user notification part 16, as shown in FIG. 2 (step S16). The vehicle after the user notification information is displayed on the screen DS1 of the user notification part 16 is switched from a state (normal mode) before the user notification information is displayed on the screen DS1 of the user notification part 16 to a state (fuel maintenance preparation mode) after the user notification information is displayed on the screen DS1 of the user notification part 16. The vehicle after the user notification information is displayed on the screen DS1 of the user notification part 16 can be supplied with the necessary amount of fuel for canceling the fuel maintenance by the user (driver) before the date when the fuel maintenance starts. The user notification information is not limited to the duration until the fuel maintenance starts and the free capacity of the fuel tank. It may include, for instance, the fuel supply amount Dd1 necessary for canceling the fuel maintenance (see FIG. 2).

When the user (driver) confirms notice of the execution start of the fuel maintenance and supplies fuel, the fuel supply amount is checked in the remaining-fuel detection part 13 (step S17). If the fuel supply amount is the predetermined amount or more (step S18: Yes), the notice of the execution start of the fuel maintenance disappears, and the fuel-maintenance-execution-date calculation part 12 calculates a duration until the fuel maintenance starts from a reference date when more than the predetermined amount of fuel is supplied to the fuel tank (step S11). On the other hand, if the fuel supply amount is less than the predetermined amount (step S18: No), the notice of the execution start of the fuel maintenance does not disappear. Thus, when the fuel maintenance takes place, the operation (fuel maintenance) using the engine as the power source starts, and the fuel maintenance is executed until the predetermined amount of fuel is supplied to the fuel tank.

In the above-described fuel maintenance guide system 11 for a vehicle according to at least one embodiment of the present invention, the user notification information including the duration until the fuel maintenance starts, the fuel amount remaining in the fuel tank, and the free capacity of the fuel tank is generated in the user-notification-information generating part 15; and the user notification information including the duration Da1 until the fuel maintenance starts, the fuel amount Db1 remaining in the fuel tank, and the free capacity Dc1 of the fuel tank is noticed in the user notification part 16. Thus, the fuel maintenance guide system 11 for a vehicle can give advance notice of the execution start of the fuel maintenance and can inform one, before the execution of the fuel maintenance, whether the necessary amount of fuel for canceling the fuel maintenance can be supplied.

The fuel maintenance guide system 21 for a vehicle according to at least one embodiment of the present invention can give advance notice of the execution start of the fuel maintenance and can inform one, before the execution of the fuel maintenance, whether necessary amount of fuel for canceling the fuel maintenance can be supplied.

As shown in FIG. 4, the fuel maintenance guide system 21 for a vehicle according to at least one embodiment of the present invention includes a fuel-maintenance-execution-date calculation part 22, a remaining-fuel detection part 23, a user-notification-information generating part 25, and a user notification part 26.

The fuel-maintenance-execution-date calculation part 22 can calculate a duration until the fuel maintenance starts, from a reference date when more than a predetermined amount of fuel is supplied to the fuel tank. For instance, the fuel-maintenance-execution-date calculation part 22 sets an execution start date of the fuel maintenance on the basis of the reference date when more than a predetermined amount of fuel is supplied to the fuel tank, and then calculates the duration until the fuel maintenance starts. Accordingly, in a case where the predetermined period is three months and the predetermined amount is 15L as described in the above example, the fuel-maintenance-execution-date calculation part 22 sets the execution start date of the fuel maintenance to three months after a reference date when fuel more than 15L is supplied to the fuel tank and calculates the duration until the fuel maintenance starts.

The remaining-fuel detection part 23 can detect the amount of fuel remaining in the fuel tank. The user-notification-information generating part 25 can generate user notification information including: the duration (duration until the fuel maintenance starts); the fuel amount (remaining fuel amount in the fuel tank); and a fuel supply amount necessary for canceling the fuel maintenance, based on the duration (duration until the fuel maintenance starts) calculated in the fuel-maintenance-execution-date calculation part 22, the remaining fuel amount detected in the remaining-fuel detection part 23, and the fuel supply amount necessary for canceling the fuel maintenance.

The user notification part 26 can receive the user notification information, generated in the user-notification-information generating part 25, from the user-notification-information generating part 25 and display the user notification information while comparing the remaining fuel in the fuel tank with the fuel supply amount necessary for canceling the fuel maintenance, on the screen DS2. More specifically, as shown in FIG. 5, the fuel supply amount necessary for canceling the fuel maintenance may be represented by a difference from the (whole) capacity of the fuel tank in the indication of the capacity of the fuel tank. Thus, the user notification part 26 displays the duration Da2 (duration until the fuel maintenance starts), the fuel amount Db2 (remaining fuel amount in the fuel tank), and the fuel supply amount Dc2 necessary for canceling the fuel maintenance on the screen DS2.

As shown in FIG. 5, for instance, on the screen DS2, a charging amount of a driving battery is represented by a bar graph with a diagram imitating the driving battery, and the amount of fuel remaining in the fuel tank is represented by a bar graph with a diagram imitating a gas station and with signs of E (Empty) and F (Full). Further, for instance, the screen DS2 displays the duration Da2 until the fuel maintenance with a diagram imitating the engine and displays the fuel supply amount Dd2 (e.g., 15L) for canceling the fuel maintenance. For instance, as shown in FIG. 5, massage "Fuel maintenance will start in 14 days, it can be canceled by 15L refueling" is displayed. Also, for instance, the screen DS2 displays the remaining fuel amount Db2 in the fuel tank and the fuel supply amount Dc2 necessary for canceling the fuel maintenance in comparison with each other. More specifically, the remaining fuel amount in the fuel tank is relatively represented by a bar graph relative to the capacity of the fuel tank, and the fuel supply amount necessary for canceling the fuel maintenance is represented by a difference from the capacity of the fuel tank relative to the indication of the capacity relatively. Thus, the remaining fuel amount in the fuel tank (bar graph indicating the remaining fuel amount) and the fuel supply amount for canceling the fuel maintenance (line indicating the fuel supply amount (e.g., 15L Line)) are superimposedly displayed.

In this configuration, since the remaining fuel amount in the fuel tank and the fuel supply amount necessary for canceling the fuel maintenance are displayed in comparison with each other on the screen DS2, the user (driver) can recognize whether the necessary amount of fuel for canceling the fuel maintenance can be supplied. Further, since the remaining fuel amount in the fuel tank is relatively represented by a bar graph relative to the capacity of the fuel tank, and the fuel supply amount necessary for canceling the fuel maintenance is relatively represented by a difference from the capacity of the fuel tank relative to the indicator of the capacity, it is possible to inform the user (driver) whether the necessary amount of fuel for canceling the fuel maintenance can be supplied.

In the above-described fuel maintenance guide system 21 for a vehicle according to at least one embodiment of the present invention, the user-notification-information generating part 25 may report the user notification information to the user notification part 26 only when the duration until the fuel maintenance starts is less than a predetermined duration.

In this case, for instance, on the screen DS2, a charging amount of the driving battery is represented by a bar graph with a diagram imitating the driving battery, and the amount of fuel remaining in the fuel tank is represented by a bar graph with a diagram imitating a gas station and with signs of E (Empty) and F (Full). The screen DS2 does not display the duration until the fuel maintenance and the line (e.g., "15L Line") indicating the fuel supply amount for canceling the fuel maintenance.

In this configuration, the user-notification-information generating part 25 provides the user notification information to the user notification part 26 only when the duration until the fuel maintenance starts is less than the predetermined duration. Thus, since the user notification information is not provided to the user notification part unless the duration until the fuel maintenance starts becomes less than the predetermined duration, the user (driver) is not conscious of the fuel maintenance unless the duration until the fuel maintenance starts becomes less than the predetermined duration, and the user (driver) is not put to extra annoyance.

The predetermined duration can be optionally set. For instance, the default value may be 14 days, and it may be changed in accordance with a traveling distance. Additionally, the predetermined duration may be set so as to include at least a holiday.

In the above-described fuel maintenance guide system 21 for a vehicle according to at least one embodiment of the present invention, the user notification part 26 blinkingly displays the fuel supply amount (line) necessary for canceling the fuel maintenance on the screen DS2 when the fuel maintenance starts.

In this configuration, since the user notification part 26 blinkingly displays the fuel supply amount necessary for canceling the fuel maintenance on the screen DS2 when the fuel maintenance starts, it is possible to bring the user's (driver's) attention to how much the fuel consumption is required to achieve the fuel supply amount necessary for canceling the fuel maintenance.

In the above-described fuel maintenance guide system 21 for a vehicle according to at least one embodiment of the present invention, when the free capacity of the fuel tank exceeds the fuel supply amount necessary for canceling the fuel maintenance, the user notification part 26 changes the indication of the remaining fuel amount in the fuel tank to an indication which shows that the free capacity of the fuel tank exceeds the fuel supply amount necessary for canceling the fuel maintenance.

In this configuration, when the free capacity of the fuel tank exceeds the fuel supply amount necessary for canceling the fuel maintenance, the user notification part 26 changes the indication of the remaining fuel amount of the fuel tank to an indication which shows that the free capacity of the fuel tank exceeds the fuel supply amount necessary for canceling the fuel maintenance. Thus, it is possible to inform the user (driver) that the fuel maintenance can be canceled if the vehicle is fully refueled at the time.

In the above-described fuel maintenance guide system 21 for a vehicle according to at least one embodiment of the present invention, the user notification part 26 displays the fuel supply amount necessary for canceling the fuel maintenance by a line superimposed on the remaining fuel amount in the fuel tank on the screen DS2.

In this configuration, since the user notification part 26 displays the fuel supply amount necessary for canceling the fuel maintenance by a line superimposed on the remaining fuel amount in the fuel tank on the screen DS2, the user (driver) can more reliably recognize whether the fuel supply amount necessary for canceling the fuel maintenance can be supplied.

As shown in FIG. 6, the fuel maintenance guide system 21 for a vehicle according to at least one embodiment of the present invention first, in the fuel-maintenance-execution-date calculation part 22, calculates the duration until the fuel maintenance starts, from a reference date when more than a predetermined amount of fuel is supplied to the fuel tank (step S21). For instance, the fuel-maintenance-execution-date calculation part 22 sets an execution start date of the fuel maintenance on the basis of the reference date when more than a predetermined amount of fuel is supplied to the fuel tank, and then calculates the duration until the fuel maintenance starts.

Then, in the remaining-fuel detection part 23, the amount of fuel remaining in the fuel tank is detected (step S22).

Then, in the user-notification-information generating part 25, the user notification information including the duration, the fuel amount, and the fuel supply amount necessary for canceling the fuel maintenance is generated based on the duration (duration until the fuel maintenance starts) calculated in the fuel-maintenance-execution-date calculation part 22, the fuel amount (remaining fuel amount in the fuel tank) detected in the remaining-fuel detection part 23, and the fuel supply amount necessary for canceling the fuel maintenance (step S23).

Then, in the user-notification-information generating part 25, it is judged whether notice of the execution start of the fuel maintenance is needed (step S24). The necessity of notice of the execution start of the fuel maintenance is judged by, for instance, whether the duration until the fuel maintenance starts is less than a predetermined duration.

Then, in the user-notification-information generating part 25, if it is judged that notice of the execution start of the fuel maintenance is needed, the user-notification-information generating part 25 displays the user notification information including the duration Da2 until the fuel maintenance starts, the fuel amount Db2 remaining in the fuel tank, and the fuel supply amount Dc2 necessary for canceling the fuel maintenance, on the screen DS2 of the user notification part 26, as shown in FIG. 5 (step S25). The vehicle, after the user notification information is displayed on the screen DS2 of the user notification part 26, is switched from a state (normal mode) before the user notification information is displayed on the screen DS2 of the user notification part 26 to a state (fuel maintenance preparation mode) after the user notification information is displayed on the screen DS2 of the user notification part 26. The vehicle after the user notification information is displayed on the screen DS2 of the user notification part 26 can be supplied with the necessary amount of fuel for canceling the fuel maintenance by the user (driver) before the date when the fuel maintenance will start.

When the user (driver) confirms notice of the execution start of the fuel maintenance and supplies fuel, the fuel supply amount is checked in the remaining-fuel detection part 23 (step S26). If the fuel supply amount is the predetermined amount or more (step S27: Yes), the notice of the execution start of the fuel maintenance disappears, and the fuel-maintenance-execution-date calculation part 22 calculates a duration until the fuel maintenance starts from a reference date (date of refueling anew) when more than the predetermined amount of fuel is supplied to the fuel tank (step S21). On the other hand, if the fuel supply amount is less than the predetermined amount (step S27: No), the notice of the execution start of the fuel maintenance does not disappear. Thus, when the fuel maintenance takes place, the operation (fuel maintenance) using the engine as the power source starts, and the fuel maintenance is executed until the predetermined amount of the fuel is supplied to the fuel tank.

With the above-described fuel maintenance guide system 21 for a vehicle according to at least one embodiment of the present invention, the user notification information including the duration until the fuel maintenance starts, the fuel amount remaining in the fuel tank, and the fuel supply amount necessary for canceling the fuel maintenance is generated; and the user information including the duration until the fuel maintenance starts, the fuel amount remaining in the fuel tank, and the fuel supply amount necessary for canceling the fuel maintenance is displayed on the screen DS2 while the remaining fuel amount Db2 in the fuel tank is compared with the fuel supply amount Dc2 necessary for canceling the fuel maintenance. More specifically, the fuel supply amount necessary for canceling the fuel maintenance is represented by a difference from the capacity of the fuel tank, relative to the capacity of the fuel tank. Thus, the fuel maintenance guide system 21 for a vehicle can give advance notice of the execution start of the fuel maintenance and can inform one, before the execution of the fuel maintenance, whether the necessary amount of fuel for canceling the fuel maintenance can be supplied.

Embodiments of the present invention were described in detail above, but the present invention is not limited thereto, and various amendments and modifications may be implemented. For instance, the above-described fuel maintenance guide system 21 according to the first embodiment and the fuel maintenance guide system according to the second embodiment may be optionally selected and installed in a vehicle. Alternatively, both the systems may be installed in a vehicle, and one of which may be optionally selected and used.

## Claims

1. A fuel maintenance guide system for a vehicle, comprising:
a fuel-maintenance-execution-date calculation part (12, 22) capable of calculating a duration until a fuel maintenance starts, from a reference date when more than a predetermined amount of a fuel is supplied to a fuel tank;
a remaining-fuel detection part (13, 23) capable of detecting a remaining fuel amount in the fuel tank;
a user-notification-information generating part (15, 25) capable of generating user notification information including the duration, the remaining fuel amount, and a fuel supply amount necessary for canceling the fuel maintenance, based on the duration calculated in the fuel-maintenance-execution-date calculation part (12, 22), the remaining fuel amount detected in the remaining-fuel detection part (13, 23), and the fuel supply amount necessary for canceling the fuel maintenance; and
a user notification part (16, 26) capable of displaying the user notification information generated in the user-notification-information generating part (15, 25) on a screen (DS1, DS2).

2. The fuel maintenance guide system for a vehicle according to claim 1, further comprising a fuel-tank-free-capacity computing part (14) capable of calculating a free capacity of the fuel tank, based on the remaining fuel amount in the fuel tank detected in the remaining-fuel detection part (13),
wherein the user notification information generated in the user-notification-information generating part (15) includes the free capacity calculated in the fuel-tank-free-capacity computing part (14).

3. The fuel maintenance guide system for a vehicle according to claim 1 or 2,
wherein the user-notification-information generating part (15) is configured to provide the user notification information to the user notification part (16) only when the duration until the fuel maintenance starts is less than a predetermined duration.

4. The fuel maintenance guide system for a vehicle according to claim 2 or 3,
wherein the user notification part (16) is configured to blinkingly display the free capacity of the fuel tank on the screen (DS1) when the fuel maintenance starts.

5. The fuel maintenance guide system for a vehicle according to any one of claims 2 to 4,
wherein the user notification part (16) is configured to change an indication of the free capacity of the fuel tank to an indication which shows that the free capacity of the fuel tank exceeds the fuel supply amount necessary for canceling the fuel maintenance when the free capacity of the fuel tank exceeds the fuel supply amount necessary for canceling the fuel maintenance.

6. The fuel maintenance guide system for a vehicle according to any one of claims 2 to 5,
wherein the user notification part (16) is configured to display the free capacity of the fuel tank in a free space above an indication showing the remaining fuel amount on the screen (DS1).

7. The fuel maintenance guide system for a vehicle according to claim 1,
wherein the user notification part (26) is capable of displaying the remaining fuel amount (Db1) in the fuel tank and the fuel supply amount (Dc2) necessary for canceling the fuel maintenance on the screen (DS2) in comparison with each other; and
wherein an indication of the fuel supply amount necessary for canceling the fuel maintenance is represented by a difference from a capacity of the fuel tank, relative to an indication of the capacity of the fuel tank.

8. The fuel maintenance guide system for a vehicle according to claim 7,
wherein the user-notification-information generating part (25) is configured to provide the user notification information to the user notification part (26) only when the duration until the fuel maintenance starts is less than a predetermined duration.

9. The fuel maintenance guide system for a vehicle according to claim 7 or 8,
wherein the user notification part (26) is configured to blinkingly display the fuel supply amount necessary for canceling the fuel maintenance on the screen when the fuel maintenance starts.

10. The fuel maintenance guide system for a vehicle according to any one of claims 7 to 9,
wherein the user notification part (26) is configured to change an indication of the remaining fuel amount in the fuel tank to an indication which shows that a free capacity of the fuel tank exceeds the fuel supply amount necessary for canceling the fuel maintenance when the free capacity of the fuel tank exceeds the fuel supply amount necessary for canceling the fuel maintenance.

11. The fuel maintenance guide system for a vehicle according to any one of claims 7 to 10,
wherein the user notification part (26) is configured to display the fuel supply amount (Dc2) necessary for canceling the fuel maintenance by a line superimposed on the remaining fuel amount (Db2) in the fuel tank on the screen (DS2).

## Patentansprüche

1. Brennstoffwartungsleitsystem für ein Fahrzeug, das Folgendes umfasst:
ein Brennstoffwartungsausführungsdatumsberechnungsteil (12, 22), das in der Lage ist, eine Dauer zu berechnen, bis eine Brennstoffwartung ab einem Referenzdatum beginnt, wenn mehr als eine vorbestimmte Menge eines Brennstoffs einem Brennstofftank zugeführt wird;
ein Restbrennstoffdetektionsteil (13, 23), das in der Lage ist, eine Brennstoffrestmenge im Brennstofftank zu detektieren;
ein Benutzerbenachrichtigungsinformationserzeugungsteil (15, 25), das in der Lage ist, Benutzerbenachrichtigungsinformationen, die die Dauer, die Brennstoffrestmenge und eine Brennstoffzufuhrmenge, die zum Abbrechen der Brennstoffwartung erforderlich ist, beinhalten, auf Basis der Dauer, die im Brennstoffwartungsausführungsdatumsberechnungsteil (12, 22) berechnet wird, der Brennstoffrestmenge, die im Restbrennstoffdetektionsteil (13, 23) detektiert wird, und der Brennstoffzufuhrmenge, die zum Abbrechen der Brennstoffwartung erforderlich ist, zu erzeugen; und
ein Benutzerbenachrichtigungsteil (16, 26), das in der Lage ist, die Benutzerbenachrichtigungsinformationen, die im Benutzerbenachrichtigungsinformationserzeugungsteil (15, 25) erzeugt werden, auf einem Bildschirm (DS1, DS2) anzuzeigen.

2. Brennstoffwartungsleitsystem für ein Fahrzeug nach Anspruch 1, das ferner ein Brennstofftankfreikapazitätserrechnungsteil (14) umfasst, das in der Lage ist, auf Basis der Brennstoffrestmenge im Brennstofftank, die im Restbrennstoffdetektionsteil (13) detektiert wird, eine freie Kapazität des Brennstofftanks zu berechnen,
wobei die Benutzerbenachrichtigungsinformationen, die im Benutzerbenachrichtigungsinformationserzeugungsteil (15) erzeugt werden, die freie Kapazität beinhalten, die im Brennstofftankfreikapazitätserrechnungsteil (14) berechnet wird.

3. Brennstoffwartungsleitsystem für ein Fahrzeug nach Anspruch 1 oder 2,
wobei das Benutzerbenachrichtigungsinformationserzeugungsteil (15) dazu ausgelegt ist, dem Benutzerbenachrichtigungsteil (16) die Benutzerbenachrichtigungsinformationen nur bereitzustellen, wenn die Dauer, bis die Brennstoffwartung beginnt, geringer ist als eine vorbestimmte Dauer.

4. Brennstoffwartungsleitsystem für ein Fahrzeug nach Anspruch 2 oder 3,
wobei das Benutzerbenachrichtigungsteil (16) dazu ausgelegt ist, die freie Kapazität des Brennstofftanks blinkend auf dem Bildschirm (DS1) anzuzeigen, wenn die Brennstoffwartung beginnt.

5. Brennstoffwartungsleitsystem für ein Fahrzeug nach einem der Ansprüche 2 bis 4,
wobei das Benutzerbenachrichtigungsteil (16) dazu ausgelegt ist, eine Anzeige der freien Kapazität des Brennstofftanks in eine Anzeige zu ändern, die zeigt, dass die freie Kapazität des Brennstofftanks die Brennstoffzufuhrmenge, die zum Abbrechen der Brennstoffwartung erforderlich ist, überschreitet, wenn die freie Kapazität des Brennstofftanks die Brennstoffzufuhrmenge, die zum Abbrechen der Brennstoffwartung erforderlich ist, überschreitet.

6. Brennstoffwartungsleitsystem für ein Fahrzeug nach einem der Ansprüche 2 bis 5,
wobei das Benutzerbenachrichtigungsteil (16) dazu ausgelegt ist, die freie Kapazität des Brennstofftanks in einem freien Raum über einer Anzeige, die die Brennstoffrestmenge anzeigt, auf dem Bildschirm (DS1) anzuzeigen.

7. Brennstoffwartungsleitsystem für ein Fahrzeug nach Anspruch 1,
wobei das Benutzerbenachrichtigungsteil (26) in der Lage ist, die Brennstoffrestmenge (Db1) im Brennstofftank und die Brennstoffzufuhrmenge (Dc2), die zum Abbrechen der Brennstoffwartung erforderlich ist, im Vergleich miteinander auf dem Bildschirm (DS2) anzuzeigen; und
wobei eine Anzeige der Brennstoffzufuhrmenge, die zum Abbrechen der Brennstoffwartung erforderlich ist, durch eine Differenz von einer Kapazität des Brennstofftanks relativ zu einer Anzeige der Kapazität des Brennstofftanks repräsentiert wird.

8. Brennstoffwartungsleitsystem für ein Fahrzeug nach Anspruch 7,
wobei das Benutzerbenachrichtigungsinformationserzeugungsteil (25) dazu ausgelegt ist, dem Benutzerbenachrichtigungsteil (26) die Benutzerbenachrichtigungsinformationen nur bereitzustellen, wenn die Dauer, bis die Brennstoffwartung beginnt, geringer ist als eine vorbestimmte Dauer.

9. Brennstoffwartungsleitsystem für ein Fahrzeug nach Anspruch 7 oder 8,
wobei das Benutzerbenachrichtigungsteil (26) dazu ausgelegt ist, die Brennstoffzufuhrmenge, die zum Abbrechen der Brennstoffwartung erforderlich ist, blinkend auf dem Bildschirm anzuzeigen, wenn die Brennstoffwartung beginnt.

10. Brennstoffwartungsleitsystem für ein Fahrzeug nach einem der Ansprüche 7 bis 9,
wobei das Benutzerbenachrichtigungsteil (26) dazu ausgelegt ist, eine Anzeige der Brennstoffrestmenge im Brennstofftank in eine Anzeige zu ändern, die zeigt, dass eine freie Kapazität des Brennstofftanks die Brennstoffzufuhrmenge, die zum Abbrechen der Brennstoffwartung erforderlich ist, überschreitet, wenn die freie Kapazität des Brennstofftanks die Brennstoffzufuhrmenge, die zum Abbrechen der Brennstoffwartung erforderlich ist, überschreitet.

11. Brennstoffwartungsleitsystem für ein Fahrzeug nach einem der Ansprüche 7 bis 10,
wobei das Benutzerbenachrichtigungsteil (26) dazu ausgelegt ist, die Brennstoffzufuhrmenge (Dc2), die zum Abbrechen der Brennstoffwartung erforderlich ist, durch eine Linie, die die Brennstoffrestmenge (Db2) im Brennstofftank überlagert, auf dem Bildschirm (DS2) anzuzeigen.

## Revendications

1. Système de guide d'entretien de carburant pour véhicule, comprenant :
une partie de calcul de date d'exécution d'entretien de carburant (12, 22) capable de calculer une durée jusqu'au commencement d'un entretien de carburant, à partir d'une date de référence où plus d'une quantité prédéterminée d'un carburant est fournie à un réservoir de carburant ;
une partie de détection de carburant restant (13, 23) capable de détecter une quantité de carburant restant dans le réservoir de carburant ;
une partie de génération d'informations de notification d'utilisateur (15, 25) capable de générer des informations de notification d'utilisateur comportant la durée, la quantité de carburant restant, et une quantité d'alimentation en carburant nécessaire pour annuler l'entretien de carburant, sur la base de la durée calculée dans la partie de calcul de date d'exécution d'entretien de carburant (12, 22), de la quantité de carburant restant détectée dans la partie de détection de carburant restant (13, 23), et de la quantité d'alimentation en carburant nécessaire pour annuler l'entretien de carburant ; et
une partie de notification d'utilisateur (16, 26) capable d'afficher les informations de notification d'utilisateur générées dans la partie de génération d'informations de notification d'utilisateur (15, 25) sur un écran (DS1, DS2).

2. Système de guide d'entretien de carburant pour véhicule selon la revendication 1, comprenant en outre une partie de calcul de capacité disponible de réservoir de carburant (14) capable de calculer une capacité disponible du réservoir de carburant, sur la base de la quantité de carburant restant dans le réservoir de carburant détectée dans la partie de détection de carburant restant (13),
dans lequel les informations de notification d'utilisateur générées dans la partie de génération d'informations de notification d'utilisateur (15) comportent la capacité disponible calculée dans la partie de calcul de capacité disponible de réservoir de carburant (14).

3. Système de guide d'entretien de carburant pour véhicule selon la revendication 1 ou 2,
dans lequel la partie de génération d'informations de notification d'utilisateur (15) est configurée pour fournir les informations de notification d'utilisateur à la partie de notification d'utilisateur (16) uniquement lorsque la durée jusqu'au commencement de l'entretien de carburant est inférieure à une durée prédéterminée.

4. Système de guide d'entretien de carburant pour véhicule selon la revendication 2 ou 3,
dans lequel la partie de notification d'utilisateur (16) est configurée pour afficher en clignotant la capacité disponible du réservoir de carburant sur l'écran (DS1) au commencement de l'entretien de carburant.

5. Système de guide d'entretien de carburant pour véhicule selon l'une quelconque des revendications 2 à 4,
dans lequel la partie de notification d'utilisateur (16) est configurée pour changer une indication de la capacité disponible du réservoir de carburant en une indication qui montre que la capacité disponible du réservoir de carburant dépasse la quantité d'alimentation en carburant nécessaire pour annuler l'entretien de carburant lorsque la capacité disponible du réservoir de carburant dépasse la quantité d'alimentation en carburant nécessaire pour annuler l'entretien de carburant.

6. Système de guide d'entretien de carburant pour véhicule selon l'une quelconque des revendications 2 à 5,
dans lequel la partie de notification d'utilisateur (16) est configurée pour afficher la capacité disponible du réservoir de carburant dans un espace disponible au-dessus d'une indication montrant la quantité de carburant restant sur l'écran (DS1).

7. Système de guide d'entretien de carburant pour véhicule selon la revendication 1,
dans lequel la partie de notification d'utilisateur (26) est capable d'afficher la quantité de carburant restant (Db1) dans le réservoir de carburant et la quantité d'alimentation en carburant (Dc2) nécessaire pour annuler l'entretien de carburant sur l'écran (DS2) en comparaison l'une avec l'autre ; et
dans lequel une indication de la quantité d'alimentation en carburant nécessaire pour annuler l'entretien de carburant est représentée par une différence d'une capacité du réservoir de carburant, par rapport à une indication de la capacité du réservoir de carburant.

8. Système de guide d'entretien de carburant pour véhicule selon la revendication 7,
dans lequel la partie de génération d'informations de notification d'utilisateur (25) est configurée pour fournir les informations de notification d'utilisateur à la partie de notification d'utilisateur (26) uniquement lorsque la durée jusqu'au commencement de l'entretien de carburant est inférieure à une durée prédéterminée.

9. Système de guide d'entretien de carburant pour véhicule selon la revendication 7 ou 8,
dans lequel la partie de notification d'utilisateur (26) est configurée pour afficher en clignotant la quantité d'alimentation en carburant nécessaire pour annuler l'entretien de carburant sur l'écran au commencement de l'entretien de carburant.

10. Système de guide d'entretien de carburant pour véhicule selon l'une quelconque des revendications 7 à 9,
dans lequel la partie de notification d'utilisateur (26) est configurée pour changer une indication de la quantité de carburant restant dans le réservoir de carburant en une indication qui montre qu'une capacité disponible du réservoir de carburant dépasse la quantité d'alimentation en carburant nécessaire pour annuler l'entretien de carburant lorsque la capacité disponible du réservoir de carburant dépasse la quantité d'alimentation en carburant nécessaire pour annuler l'entretien de carburant.

11. Système de guide d'entretien de carburant pour véhicule selon l'une quelconque des revendications 7 à 10,
dans lequel la partie de notification d'utilisateur (26) est configurée pour afficher la quantité d'alimentation en carburant (Dc2) nécessaire pour annuler l'entretien de carburant par une ligne superposée sur la quantité de carburant restant (Db2) dans le réservoir de carburant sur l'écran (DS2).
